(19) **Europäisches Patentamt**
**European Patent Office**
**Office européen des brevets**

(11) **EP 3 054 620 A1**

(12) **EUROPEAN PATENT APPLICATION**

(43) Date of publication:
**10.08.2016 Bulletin 2016/32**

(51) Int Cl.:
***H04L 9/06*** (2006.01)

(21) Application number: **15305166.9**

(22) Date of filing: **05.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **GEMALTO SA**
**92190 Meudon (FR)**

(72) Inventor: **Kannan, Aarthi**
**92190 Meudon (FR)**

(74) Representative: **Lotaut, Yacine Diaw**
**Gemalto SA**
**Intellectual Property Department**
**6, rue de la Verrerie**
**92190 Meudon (FR)**

(54) **System and method for performing block cipher cryptography by implementing a mixer function that includes a substitution-box and a linear transformation using a lookup-table**

(57) A cryptography machine, method and computer-readable storage medium with instructions for replacing an S-box substitution followed by a linear transformation with one of more lookup tables when performing a cryptography operation, for example, a cryptography operation of the SMS4 algorithm. Other systems and methods are disclosed.

Fig. 7

**Description**

**BACKGROUND OF THE INVENTION**

The present invention relates generally to electronic cryptography technology, and in particular to an efficient mechanism for performing a block cipher.

Electronic communication and commerce can be powerful yet dangerous tools. With the wide-spread availability of network technology, such as the Internet, there is an ever increasing use of online tools for communication and commerce. Every year more users find it easier or quicker to conduct important transactions, whether in the form of correspondence or commerce, using computers and computer networks. However, there is always the risk that the security of electronic transactions is compromised through interception by third parties who do not have the right to partake in the transactions. When malicious third parties obtain access to otherwise private transactions and data there is risk of economic loss, privacy loss, and even loss of physical safety. Cryptography is one mechanism employed to avoid intrusion into the privacy of electronic transactions and data.

Cryptography is a technology for hiding a message in the presence of third parties using mathematical techniques in which a message is encrypted in such a way that it can only be decrypted using a secret key that should only be known by the recipient and/or sender of a message.

Cryptographic algorithms have inputs and outputs. In the case of encryption, the input is a message that is to be protected in *plaintext*. The plaintext message is manipulated by the cryptographic algorithm to produce a *ciphertext*, the output. To produce the ciphertext the cryptographic algorithm performs certain mathematical operations that include the use of a secret key. The key may be a shared secret, e.g., between a sender and recipient, or may be a private key held by the recipient.

One frequently used cryptographic technique is the *S-box*. The S-box technique involves the non-linear substitution of a particular set of bits for another set of bits through the use of a two-dimensional lookup table. For example, in the SMS4 encryption algorithm ([Diffie] Whitfield Diffie and George Ledin (translators). SMS4 Encryption Algorithm for Wireless Networks. Cryptology ePrint Archive, Report 2008/329, 2008. http://eprint.iacr.org/), a 32-bit input word ($A$) is divided into byte-components ($a0,a1,a2,a3$). These are used to determine a resulting 32-bit output word, as follows:

$$B = (b0,b1,b2,b3) = \tau(A) = (\text{Sbox}(a0),\ \text{Sbox}(a1),\ \text{Sbox}(a2),\ \text{Sbox}(a3))$$

On 32-bit computers this is an inefficient use of resources in that both input and output of the S-box look-up operations are 8-bit bytes and thus do not make use of the data-bus width on computers with 32-bit data buses and registers. Furthermore, each look-up operation is accompanied by a 32-bit to 8-bit conversion as well as requisite shift and OR operations to convert the output bytes into 32-bit words that may be used in subsequent algorithm steps.

In certain cryptographic algorithms the S-box substitutions are followed by other transformations. For example, in the SMS4 encryption algorithm the S-box substitution is followed by a linear substitution:

$$L(B) = B \oplus (B{<}{<}{<}2) \oplus (B{<}{<}{<}10) \oplus (B{<}{<}{<}18) \oplus (B{<}{<}{<}24)$$

Where "$\oplus$" denotes an XOR operation and "$<<<$" denotes a Left Rotate operation. These four XOR and Left Rotate operations contribute to the overall computational cost of the encryption operation.

It is increasingly common for computing architectures to have multiple processors on one circuit that can operate in parallel. When speed-of-execution is important, it is desirable when algorithms lend themselves to implementation on such parallel architectures thereby taking full advantage of the parallelism available.

As it is desirable to perform cryptography operations efficiently, for example, to allow for encrypting or decrypting large data files without significant delay to the end-user, it is desirable to minimize the number of computations and to allow for optimal use of CPU resources such as data buses and registers.

From the foregoing it will be apparent that there is still a need for an improved technology to provide a secure cryptography mechanism that is computationally efficient, does not require excessively large registers or other storage, and with which a portable security device - e.g., a smart card connected to a host computer - can provide the capability of providing cryptographic services that are protected from side channel attacks.

## BRIEF DESCRIPTION OF THE DRAWINGS

Figure 1 is a schematic illustration of a host computer with a portable security device, e.g., a smart card, connected thereto for performing cryptographic services through connection over a network to one or more servers.

Figure 2 is a schematic illustration of a portable security device.

Figure 3 is a schematic illustration of programs stored in a memory of the portable security device of Figure 2.

Figure 4 is a schematic illustration of a cryptography module program listing that may be stored in the memory of a portable security device as illustrated in Figure 3 and which performs a cryptographic operation including a round function $F$ including a mixer-transformation $T$ having an S-box substitution followed by a linear transformation.

Figure 5 a schematic illustration illustrating the round function $F$ of Figure 4.

Figure 6 a schematic illustration illustrating the mixer-transformation $T$ of Figure 5.

Figure 7 a schematic illustration illustrating the mixer-transformation $T'$ that implements the mixer-transformation $T$ of Figures 4 through 6 using lookup tables (LUT).

Figure 8 is a listing of the elements of an SMS4 S-box.

Figures 9a - 9d are listings of the elements of the lookup tables LUT0 through LUT3 used in the mixer-transformation $T'$ of Figure 7.

Figure 10 is a schematic illustration of a parallel architecture for performing the transformations of Figure 7 in parallel.

## DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that increases the computational efficiency of cryptographic apparatuses that perform block cipher cryptography by improving the utilization of the processing resources of the cryptography apparatus. Furthermore, the provided technology efficiently reduces the risk of differential power analysis attacks.

Smart cards are plastic cards with an embedded microprocessor and a secure storage. They are portable, secure, and tamper-resistant. Smart cards provide security services in many domains including telecommunication, banking, commerce, and citizen identity. Smart cards can take different forms, such as credit card shaped cards with electrical connectors to connect the smart card to a smart card reader, USB tokens with embedded smart cards, and SIM cards for use in mobile telephones and tablet devices. Smart cards are used herein as examples of portable security devices that may be used in implementations of the technology described herein. Other examples of portable security devices include smart memory cards, flash memory, etc. In a preferred embodiment, the portable security device has a processor, a memory for storing programs and data, and some security features to make the device relatively tamper-proof. Smart cards are used herein as examples of such devices.

While the mechanism for performing a cryptographic calculation described herein may be used advantageously in smart cards and other portable security tokens used for performing cryptographic calculations, the same mechanisms may also be used with other cryptographic processors. Thus, smart cards are used herein for illustrative purposes only.

Digital signature and other cryptography are examples of functions that smart cards provide. The smart card stores private or shared secret keys in its secure storage and performs cryptographic operations to generate a digital signature for a given input or to decrypt a given input. A smart card works with a host device, such as a personal computer (PC), cell phone, tablet device or banking terminal. A PC application, such as an email client or a web browser, typically works with a smart card to sign, encrypt, or decrypt a document. The cryptographic operation may be part of a challenge-response mechanism for user authentication. The PC application and the smart card interact through some cryptographic API called middleware, which is designed to communicate with the smart card. In this scenario, the smart card provides services locally to the PC.

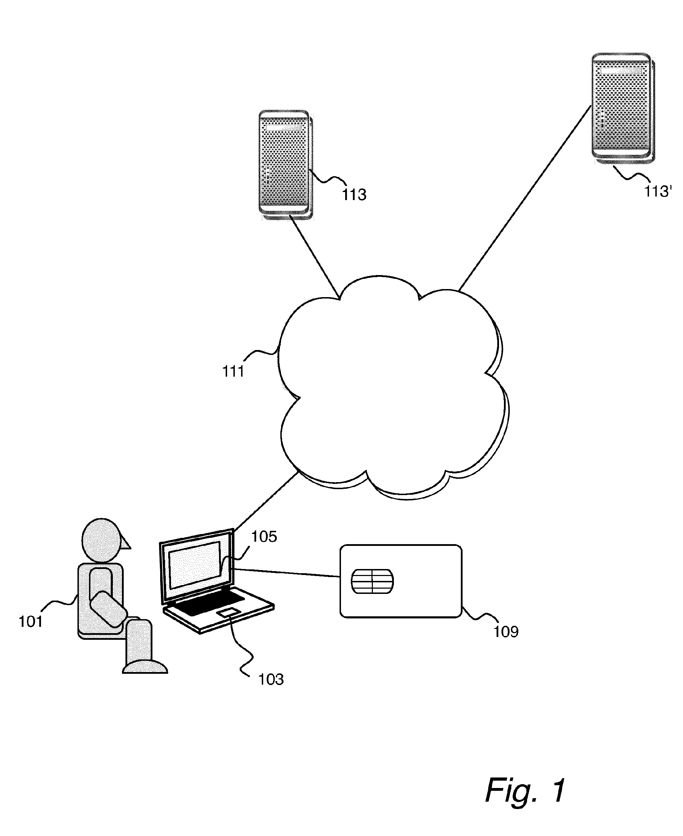

Figure 1 is a schematic illustration of a network 111 connecting a host computer 103 with a portable security device 109, e.g., a smart card, connected thereto, to one or more remote servers 113. The host computer 103 is operated by a user 101 who interacts with one of the servers 113 via a web browser window 105 of a web browser. In the example scenario illustrated in Figure 1, the smart card 109 provides the cryptographic operations on behalf of the user 101, e.g., to cryptographically sign documents, to decrypt messages received from the relying party 113, or to perform a cryptographic operation as part of a challenge-response authentication mechanism.

While Figure 1 provides an illustration of a scenario in which cryptography may play an important role, there are many other important uses for cryptography. Thus, the technology described herein is not limited in its application to the usage example illustrated in Figure 1.

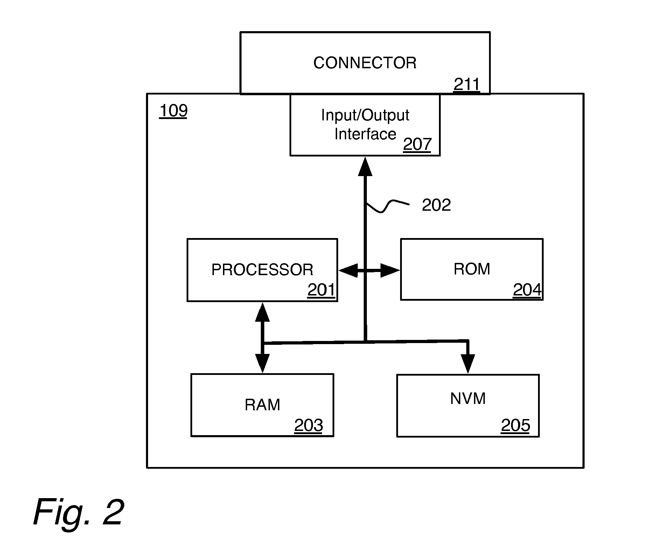

Figure 2 is a schematic illustration of a portable security device 109, for example, a smart card. The portable security device 109 may include a processor 201 connected via a bus 202 to a random access memory (RAM) 203, a read-only memory (ROM) 204, and a non-volatile memory (NVM) 205. The portable security device 109 further includes an input/output interface 207 for connecting the processor 201, again typically via the bus 202, to a connector 211 by which the portable security device 109 may be connected to the host computer 103.

In alternative embodiments, the connection between the host computer 103 and the portable security device 109 is wireless, for example, using nearfield communication (NFC) or other radio or microwave communication technologies.

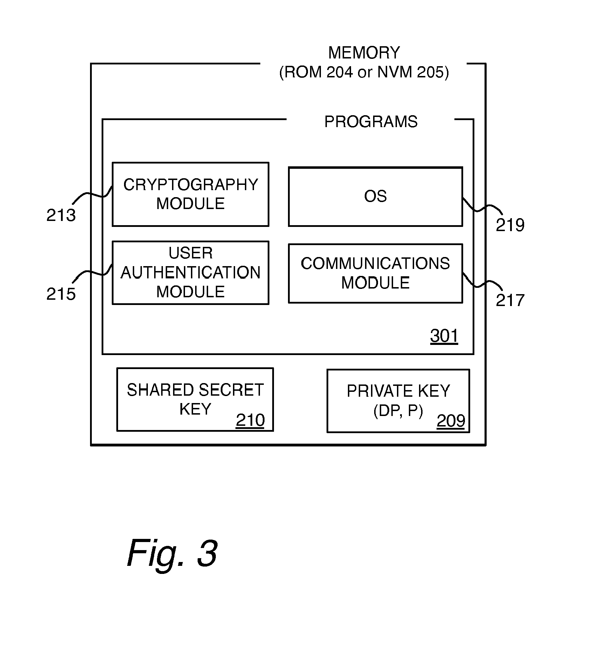

The ROM 204 and/or NVM 205 may include computer programs 301 as is illustrated in Figure 3. While it is here depicted that the computer programs 301 are all co-located in the ROM 204 or the NVM 205, in actual practice there is no such restriction as programs may be spread out over multiple memories and even temporarily installed in RAM 203. Furthermore, the portable security device 109 may include multiple ROMs or NVMs. The programs 301 include operating system programs as well as application programs loaded onto the portable security device 109. The ROM 204 or NVM 205 may also contain private data, such as a private key 209 or a shared secret key 210, stored either in its basic form or in derived quantities.

The portable security device 109 programs 301 may include a cryptography module 213, a user authentication module 215, a communications module 217, and the operating system OS 219.

Thus, the portable security device 109 may receive a document or message via the connector 211. The processor 201, by executing instructions of the cryptography module 213, may digitally sign the document/message or may decrypt the document/message using the private key 209 or shared secret key 210. Using functionality provided through the communications module 217, the processor 201 may receive and transmit communications with the host computer 103.

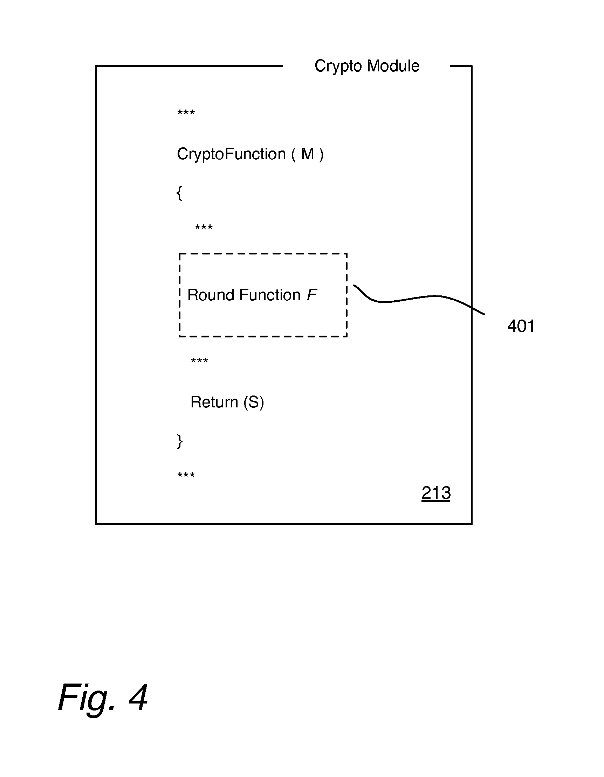

Figure 4 is a schematic illustration of a portion of an implementation of the cryptography module 213. The cryptography module 213 would contain one or more functions, methods, or routines. One possible function could be, as is illustrated in Figure 4, a function called *CryptoFunction( )* which in this case, for illustrative purposes, takes the argument M as the message to sign or decrypt. In the cryptography module 213 the signature S is computed using the SMS4 algorithm.

The SMS4 algorithm consists of 32 rounds, wherein in each round a *RoundFunction F* 401 is executed. For example, for encryption, if the plaintext 32-bit input word is denoted as $X = (X0,X1,X2,X3)$ where X0 ... X3 are 8-bit bytes, and the corresponding 32-bit output word is denoted as $Y = (Y0,Y1,Y2,Y3)$ for a round $i$, $i$ = 1...32, the 32-bit encryption key is denoted as $rk_i$, then for a given round $i$:

$$X_{i+4} = F(X_i, X_{i+1}, X_{i+2}, X_{i+3}) = X_i \oplus T(X_{i+1} \oplus X_{i+2} \oplus X_{i+3} \oplus rk_i)$$

where $T$ is referred to as a *mixer-substitution.*

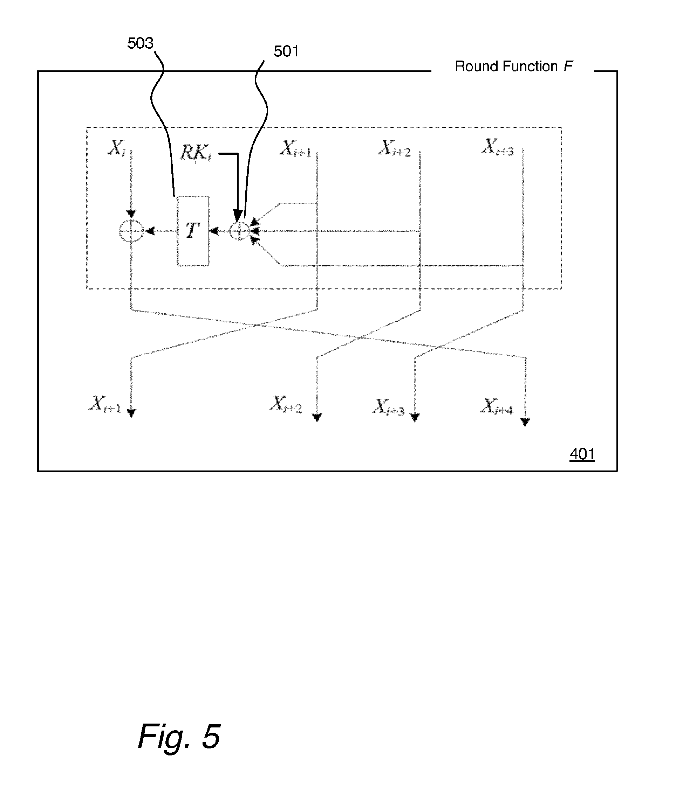

The above calculation is illustrated in Figure 5. Each of $X_{i+1}$, $X_{i+2}$, $X_{i+3}$, and $rk_i$ are input the XOR operation 501, the output of which is input to the mixer-substitution 503. The output of the mixer-substitution 503 is XORed with the current $X_i$ to produce $X_{i+4}$.

In the prior art, let the 32-bit word A = $(a_0, a_1, a_2, a_3)$ = $X_{i+1} \oplus X_{i+2} \oplus X_{i+3} \oplus rk_i$, then the mixer-substitution $T$ consists of four parallel 8-bit S-box substitutions followed by a linear substitution $L$:

$$T = L(\tau(.))$$

$$B = (b_0, b_1, b_2, b_3) = \tau(A) = (\text{Sbox}(a_0), \text{Sbox}(a_1), \text{Sbox}(a_2), \text{Sbox}(a_3))$$

where B is a 32-bit word. The Sbox for this substitution may be found in [Diffie].

$$C = L(B) = B \oplus (B <<< 2) \oplus (B <<< 10) \oplus (B <<< 18) \oplus (B <<< 24)$$

where $C$ is a 32-bit word such that $C = (c_0, c_1, c_2, c_3)$.

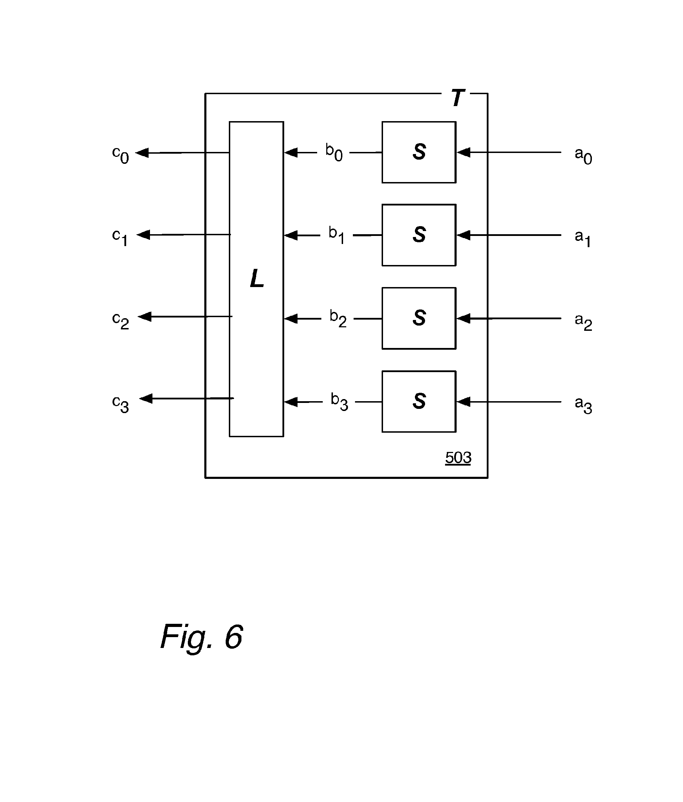

The above equations are illustrated in Figure 6. The mixer-substitution $T$ 503 consists of parallel application of the S-box $S$. The four inputs $a_0 ... a_3$ are used to look up S-box S output from the S-box substitution $S$. The outputs, i.e., b0 ... b3, are concatenated to form the 32-bit word $B$ by left shifting:

$$B = b_0 << 24 \mid b_1 << 16 \mid b_2 << 8 \mid b_3$$

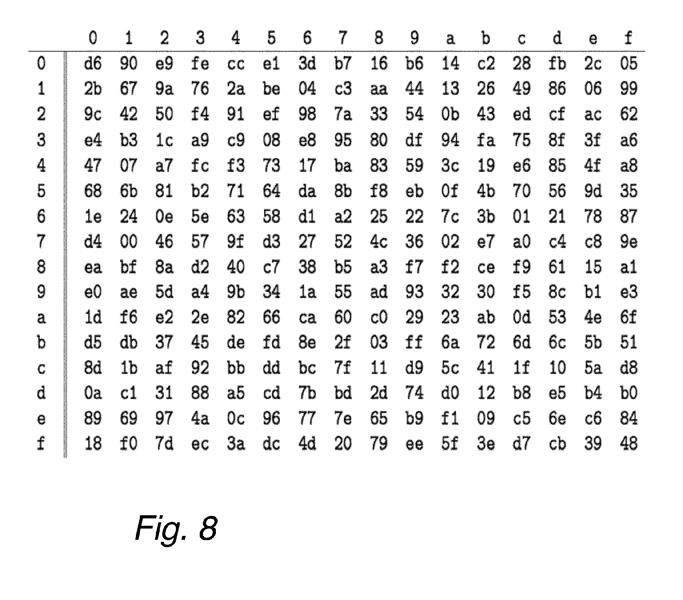

Figure 8 is a listing of the elements of the SMS4 S-box. For example, for the input of $a_i$ = 'da', the output from the S-box is 'd0', and for an input $a_i$ = 'd3', the output is '88'.

The 32-bit word $B$ is then input into the linear transformation $L$ as provided above.

As discussed above in the background section, the 8-bit S-box substitutions are inefficient on a 32-bit machine or, rather, do not make optimal use of the resources of a 32-bit machine. Furthermore, the rotate and shift operations require a significant overhead in terms of computation cost.

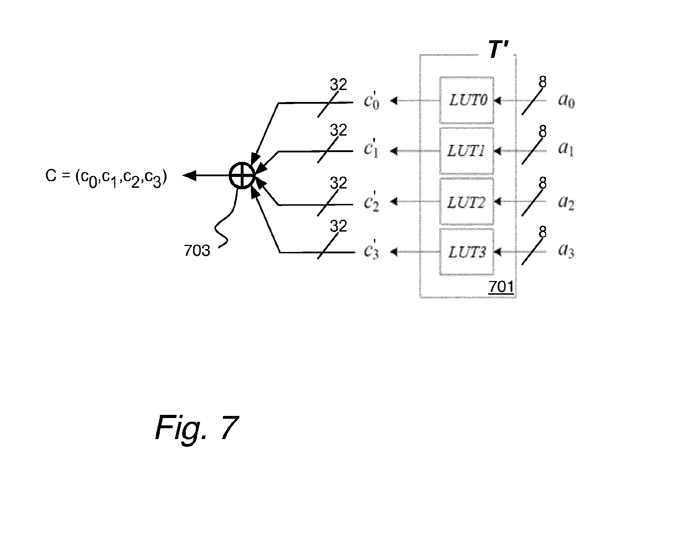

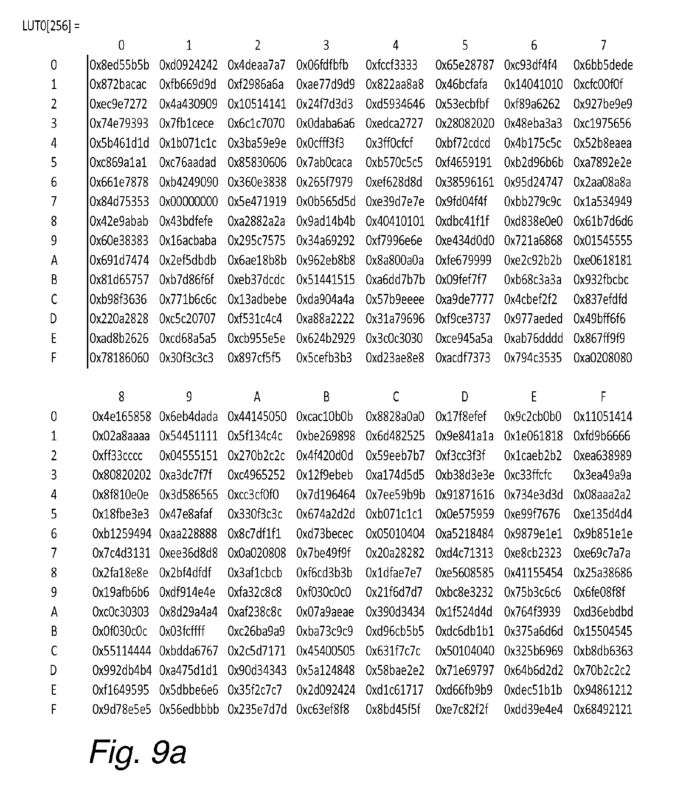

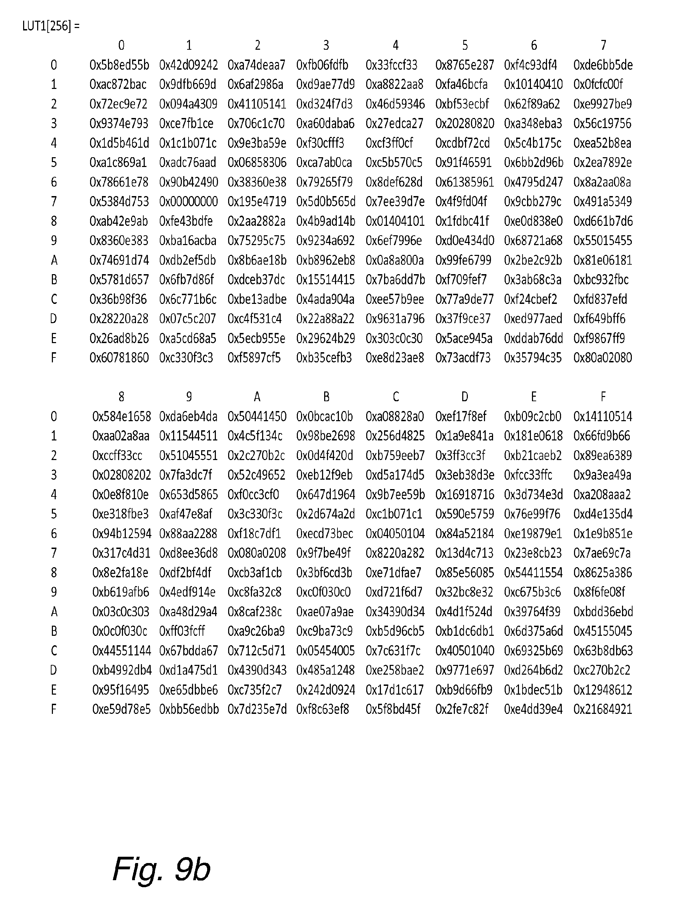

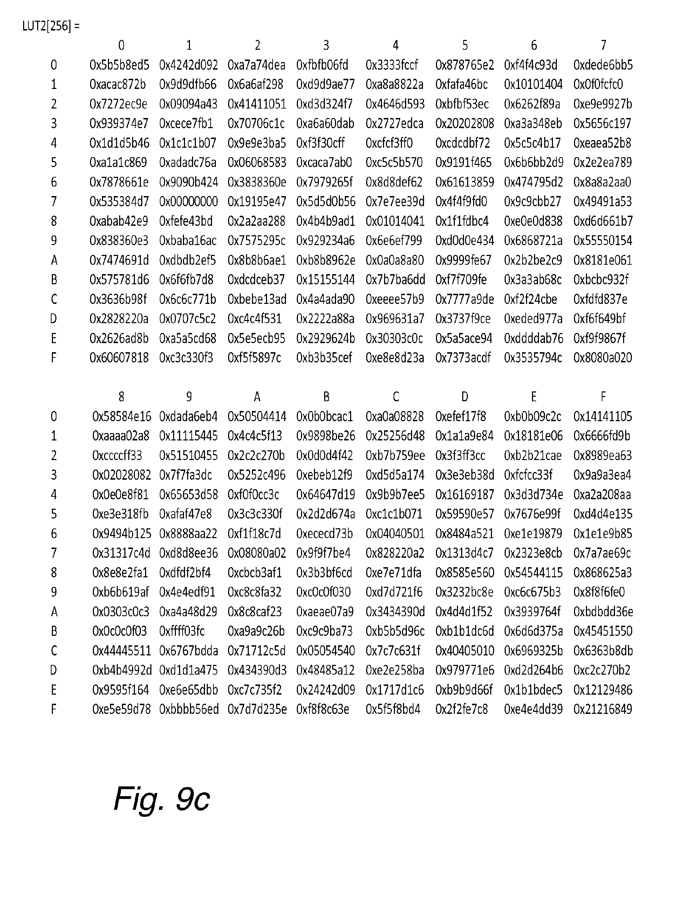

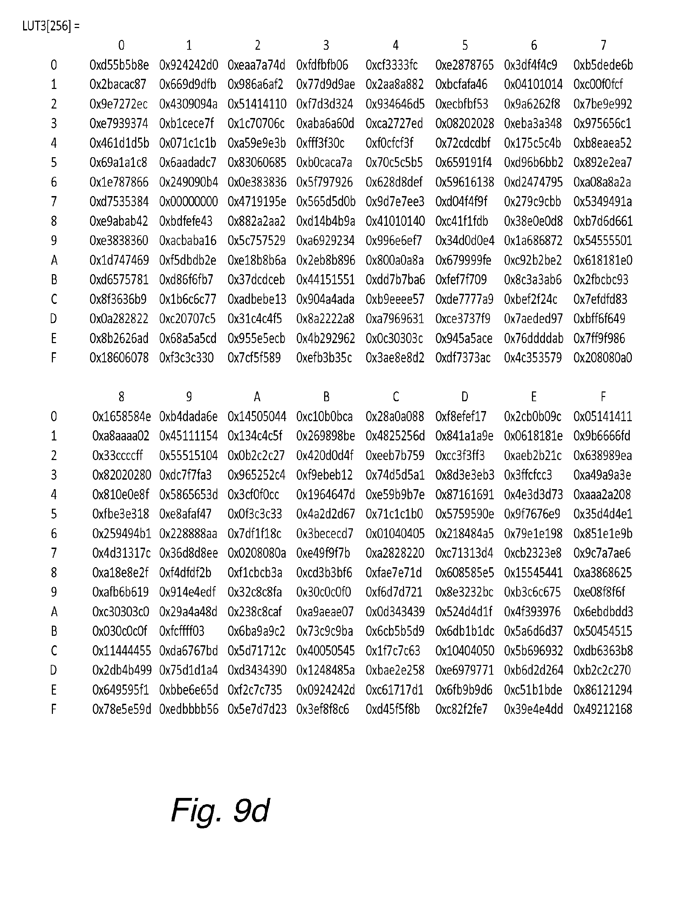

Figure 7 illustrates an embodiment of an improved cryptographic process that combines the S-box substitutions and linear transformation $L$ of Figure 6 into four lookup tables $LUT0 ... LUT3$, collectively being the mixer-transformation $T'$ 701. The component bytes input word $A$, i.e., $a_0,a_1,a_2,a_3$, are input into the lookup tables $LUT0 ... LUT3$, respectively. The lookup tables for LUT0 ... LUT3, used herein for a preferred embodiment implementing the SMS4 algorithm mixer-substitution $T'$ 701, are illustrated in Figure 9. The 4-bit nibbles that make up the each input byte $a_i$ provide the indices into the lookup table. The outputs - $\left( c'_0, c'_1, c'_2, c'_3 \right)$ - are all 32-bit words. For example, if the input byte for $a_0$ is 'EF', then go to the e-th row and the F-th col of $LUT1$, to find $LUT1('EF') = 0x12948612$.

The outputs $c'_0, c'_1, c'_2, c'_3$ are combined through XOR operation 703 to produce the 32-bit output $C = (c_0, c_1, c_2, c_3)$:

$$C = (c_0, c_1, c_2, c_3) = c'_0 \oplus c'_1 \oplus c'_2 \oplus c'_3$$

The output $C$ thus obtained has the same value as the value $C$ obtained from the direct calculation using the mixer function $T$ 503 as described above.

The four lookup tables LUT0 through LUT3 are computed as follows:

For each element $i$, $i$ = 0 to 255, in the SMS-4 S-box:

$Z$ = zero-extend the S-box[$i$] from 8 bits to 32 bits.
$LUT0[i] = L (Z << 24)$
$LUT1[i] = L (Z << 16)$
$LUT2[i] = L (Z << 8)$
$LUT3[i] = L (Z)$
where $L$ is the same linear substitution as used in SMS4 and described above.

For example, S-box[0] (for an element corresponding to an a value of 0x00) is 0xd6. Thus, zero extending it yields a 32-bit value of 0x000000d6, which is stored in the value $Z$. For LUT0 it is left-shifted into the value 0xd6000000, which upon the linear substitution $L$ results in the value 0x8ed55b5b. Left-shifting $Z$ for $LUT1$ by 16-bits yields 0x00D60000, which on linear substitution $L(0x00D60000)$ = 0x5B8ED55B. Left-shifting $Z$ for $LUT2$ by 8-bits yields 0x0000D600, which on linear substitution $L(0x0000D600)$ = 0x5B5B8ED5. For $LUT3$ no shifting of $Z$ is performed, thus it remains 0x000000D6, which on linear substitution $L(0x0000006)$ = 0xD55B5B8E.

Thus, $LUT0(0)$ = 0x8ED55B5B,
$LUT1(0)$ = 0x5B8ED55B,
$LUT2(0)$ = 0x5B5B8ED5,
$LUT3(0)$ = 0xD55B5B8E.

All 256 elements of each of the four LUTs are calculated in this manner.

Figures 9(a) through 9(d) are listings of $LUT0$ through $LUT3$ for a preferred embodiment.

The output values $C = (c_0, c_1, c_2, c_3)$ from the *LUT0 ... LUT3* lookup tables in the mixer-transformation T' are equivalent to the output $C = (c_0, c_1, c_2, c_3)$ from the mixer-transformation $T$ 503 of figure 6. Thus, the mixer-transformation T' 701 may take the place of mixer-transformation 501 in the round function $F$ 401 of Figure 5 and consequently the round function $F$ in the CryptoFunction ($M$) of Crypto Module 213 of Figure 4 may be implemented using the much more efficient implementation provided by the mixer-transformation $T$' 701.

The 4 *LUTs* (with combined size of 4096 bytes) are pre-computed and placed in program memory, for example, program memory 301 of Figure 3, and referred to during program execution.

In an alternative embodiment, a single lookup table (*LUT0* of size 1024 bytes) can be used with rotation of table values for platforms with memory constraints. For this alternative approach, the output C for each round is generated as follows:

$$C = LUT0(a_0) \oplus ROR\_8 (LUT0(a_1)) \oplus ROR\_16(LUT0(a_2)) \oplus ROR\_24(LUT0(a_3))$$

where $ROR\_x$ denotes rotate the 32-bit word by $x$ bits to the right.

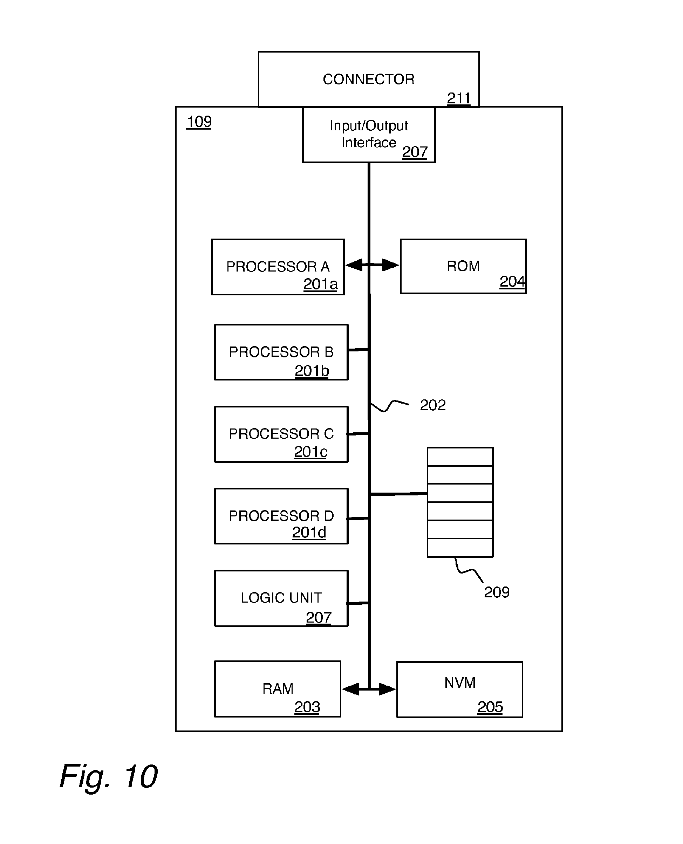

In an alternative embodiment, illustrated in Figure 10, parallel processors are employed to perform the inherently parallel table-lookups of Figure 7. In a first sequence of operations, processors A - D 201a - 201 d perform the table-lookups from LUT0 - LUT3 in parallel. The outputs from these four parallel operations may then be placed in separate registers in a register file 209. In a subsequent sequence of operations one of the processors perform the XOR operation 703. In yet a further alternative embodiment, the XOR operation is performed by a separate logic unit 209 which may be dedicated gates for the purpose of performing the specific XOR operation 703 thereby allowing for performing the cryptography operation of the lookup tables on a subsequent data word in parallel with the XOR operation 703 thereby providing for yet additional speed improvement of the cryptography operation.

SMS4 encrypt/decrypt operations implemented as described hereinabove in conjunction with Figure 6 has numerous advantages.

Such operations exhibit faster performance on 32-bit machines than the direct implementation method due to the reduced number of operations and 32-bit handling. This provides better overall performance over large number of encryption/decryption operations. Sample trials of the 4 LUT-based approach with a 32-bit desktop PC for 1 million trials have achieved performance gains of up to 4 times (approximately 74 % speedup) over the direct implementation.

The 4 LUT-based approach has higher resilience to side-channel attacks because the output of the non-linear S-box step is not directly handled; rather, only the output of the following linear transform is generated. This ensures that power traces of the S-box look-up stage cannot be captured and used to launch correlation cower analysis (CPA) or differential power attacks (DPA) to discern the secret key $rk_i$. This has the effect of improving security during SMS4 encryption/decryption.

With the LUT-based approach, the number of operations is vastly reduced, thereby preventing potential opportunities to induce faults in the implementation. This accords improved protection for the implementation against fault and differential fault attacks.

The same LUTs can be used for both encryption and decryption, since the mixer-transformation $T$, and therefore also the improved mixer-transformation $T$', for the SMS4 algorithm is identical for encryption and decryption.

The LUT-based approach preserves the complementary property of the SMS4 algorithm; again the same LUTs can be used for encryption/decryption of the complementary case. This property of the SMS4 algorithm can be used as a countermeasure to detect differential fault attacks.

Platforms with memory constraints can implement a single LUT-based approach with a slight trade-off in terms of performance speed, though it would nevertheless be significantly faster than the direct implementation method; there is no reduction in security of the proposed invention in this case. Sample trials of the single LUT-based approach with a 32-bit desktop PC for 1 million trials reveal performance gains of up to 3 times (approximately 66 % speedup) over the direct implementation method.

Although specific embodiments of the invention have been described and illustrated, the invention is not to be limited to the specific forms or arrangements of parts so described and illustrated. The invention is limited only by the claims.

**Claims**

1. A method of operating a cryptography machine having a central processing unit, and a storage unit connected to the central processing unit to perform a cryptography operation, the method comprising:

storing in the storage unit at least one lookup table (LUTx) having an 8-bit input and a 32-bit output, the lookup table values corresponding to an S-box operation followed by a linear shift operation on the input value ($a_x$) wherein the linear rotate operation has the form:

$$cx = B \oplus (B <<< 2) \oplus (B <<< 10) \oplus (B <<< 18) \oplus (B <<< 24)$$

*where*

$$B = (b0, b1, b2, b3) = \text{S-box}(a0) \mid \text{S-box}(a1) \mid \text{S-box}(a2) \mid \text{S-box}(a3);$$

receiving by the cryptography machine an input message word (X) to be encrypted; and
operating the CPU of the cryptography machine to:
determine substitution input $A = (a_0, a_1, a_2, a_3)$ from the input message word (X) and a roundkey (RK);
determine substitution output value $C = (c_0, c_1, c_2, c_3)$ by XORing output (C) from lookup table (LUTx) using the value $A = (a_0, a_1, a_2\ a_3)$ as input.

2. The method of operating a cryptography machine having a central processing unit and a storage unit of Claim 1, wherein the at least one lookup table (LUTx) are four lookup tables (LUT0, LUT1, LUT2, LUT3) and the output (C') from the lookup table (LUTx) is determined by looking up each of $c_0'$, $c_1'$, $c_2'$, and $c_3'$ from *LUT0, LUT1, LUT2,* and *LUT3,* respectively.

3. The method of operating a cryptography machine having a central processing unit and a storage unit of Claim 1, wherein the at least one lookup table (LUTx) is on lookup table (*LUT0*) and the output (*C'*) from the lookup table (*LUTx*) is determined by looking up each of $c_0'$, $c_1'$, $c_2'$, and $c_3'$ from *LUT0* as follows: $c_0' = LUT0(a_0)$ $c_1' = ROR\_8\ (LUT0(a_1)$ $c_2' = ROR\_16(LUT0(a_2))$ $c_3' = ROR\_24(LUT0(a_3))$
where ROR_x is a right-rotate operation by x bits.

4. The method according to any previous claim, wherein *LUTx* is determined by for each element *i* in the S-box:

zero-extending the element S-box[*i*];
left shifting the zero-extended element by *n* bits where n = 24 for x=0, n=16 for x=1, n=8 for x=2, and n=0 for x=3;
taking the transformation *L* of the left-shifted zero-extended element;
where the transformation *L*(B) is

$$L(B) = B \oplus (B <<< 2) \oplus (B <<< 10) \oplus (B <<< 18) \oplus (B <<< 24)$$

inserting the result from the transformation *L* of the left-shifted zero-extended element into *LUTx.*

5. The method of any preceding claim, wherein the table-lookup operations from the at least one lookup-table is performed in parallel on a plurality of processors.

6. The method of the preceding claim, wherein the outputs from the plurality of processors are XORed in parallel to the plurality of processors performing the method of any of the preceding claims on a subsequent dataword.

7. The method of any preceding claim, wherein the at least one lookup table *LUTx* is as set forth in Figure 9.

8. The method of any preceding claim, wherein the cryptography operation is an operation of the SMS-4 algorithm.

9.  The method of any preceding claim, wherein the S-box operation followed by the linear shift operation is the S-box of the SMS4 algorithm as set forth in Figure 8.

10. An electronic cryptography device comprising a central processing unit, memory, and an instruction storage wherein the instruction storage contains instructions to cause the central processing unit to perform the method of any of the preceding claims.

11. A computer readable memory comprising instructions for a central processing unit of a cryptography device wherein the instruction storage contains instructions to cause the central processing unit to perform the method of any of claims 1 through 7.

*Fig. 1*

CONNECTOR
<u>211</u>

<u>109</u>

Input/Output
Interface <u>207</u>

~ 202

PROCESSOR
<u>201</u>

ROM
<u>204</u>

RAM
<u>203</u>

NVM
<u>205</u>

*Fig. 2*

MEMORY
(ROM 204 or NVM 205)

PROGRAMS

CRYPTOGRAPHY
MODULE

213

USER
AUTHENTICATION
MODULE

215

OS

219

COMMUNICATIONS
MODULE

217

301

SHARED SECRET
KEY         210

PRIVATE KEY
(DP, P)   209

*Fig. 3*

Crypto Module

```
***

CryptoFunction ( M )

{
    ***
```

Round Function $F$

```
    ***

    Return (S)

}
***
```

213

401

## Fig. 4

Fig. 5

*Fig. 6*

*Fig. 7*

|   | 0 | 1 | 2 | 3 | 4 | 5 | 6 | 7 | 8 | 9 | a | b | c | d | e | f |
|---|---|---|---|---|---|---|---|---|---|---|---|---|---|---|---|---|
| 0 | d6 | 90 | e9 | fe | cc | e1 | 3d | b7 | 16 | b6 | 14 | c2 | 28 | fb | 2c | 05 |
| 1 | 2b | 67 | 9a | 76 | 2a | be | 04 | c3 | aa | 44 | 13 | 26 | 49 | 86 | 06 | 99 |
| 2 | 9c | 42 | 50 | f4 | 91 | ef | 98 | 7a | 33 | 54 | 0b | 43 | ed | cf | ac | 62 |
| 3 | e4 | b3 | 1c | a9 | c9 | 08 | e8 | 95 | 80 | df | 94 | fa | 75 | 8f | 3f | a6 |
| 4 | 47 | 07 | a7 | fc | f3 | 73 | 17 | ba | 83 | 59 | 3c | 19 | e6 | 85 | 4f | a8 |
| 5 | 68 | 6b | 81 | b2 | 71 | 64 | da | 8b | f8 | eb | 0f | 4b | 70 | 56 | 9d | 35 |
| 6 | 1e | 24 | 0e | 5e | 63 | 58 | d1 | a2 | 25 | 22 | 7c | 3b | 01 | 21 | 78 | 87 |
| 7 | d4 | 00 | 46 | 57 | 9f | d3 | 27 | 52 | 4c | 36 | 02 | e7 | a0 | c4 | c8 | 9e |
| 8 | ea | bf | 8a | d2 | 40 | c7 | 38 | b5 | a3 | f7 | f2 | ce | f9 | 61 | 15 | a1 |
| 9 | e0 | ae | 5d | a4 | 9b | 34 | 1a | 55 | ad | 93 | 32 | 30 | f5 | 8c | b1 | e3 |
| a | 1d | f6 | e2 | 2e | 82 | 66 | ca | 60 | c0 | 29 | 23 | ab | 0d | 53 | 4e | 6f |
| b | d5 | db | 37 | 45 | de | fd | 8e | 2f | 03 | ff | 6a | 72 | 6d | 6c | 5b | 51 |
| c | 8d | 1b | af | 92 | bb | dd | bc | 7f | 11 | d9 | 5c | 41 | 1f | 10 | 5a | d8 |
| d | 0a | c1 | 31 | 88 | a5 | cd | 7b | bd | 2d | 74 | d0 | 12 | b8 | e5 | b4 | b0 |
| e | 89 | 69 | 97 | 4a | 0c | 96 | 77 | 7e | 65 | b9 | f1 | 09 | c5 | 6e | c6 | 84 |
| f | 18 | f0 | 7d | ec | 3a | dc | 4d | 20 | 79 | ee | 5f | 3e | d7 | cb | 39 | 48 |

*Fig. 8*

LUT0[256] =

| | 0 | 1 | 2 | 3 | 4 | 5 | 6 | 7 |
|---|---|---|---|---|---|---|---|---|
| 0 | 0x8ed55b5b | 0xd0924242 | 0x4deaa7a7 | 0x06fdfbfb | 0xfccf3333 | 0x65e28787 | 0xc93df4f4 | 0x6bb5dede |
| 1 | 0x872bacac | 0xfb669d9d | 0xf2986a6a | 0xae77d9d9 | 0x822aa8a8 | 0x46bcfafa | 0x14041010 | 0xcfc00f0f |
| 2 | 0xec9e7272 | 0x4a430909 | 0x10514141 | 0x24f7d3d3 | 0xd5934646 | 0x53ecbfbf | 0xf89a6262 | 0x927be9e9 |
| 3 | 0x74e79393 | 0x7fb1cece | 0x6c1c7070 | 0x0daba6a6 | 0xedca2727 | 0x28082020 | 0x48eba3a3 | 0xc1975656 |
| 4 | 0x5b461d1d | 0x1b071c1c | 0x3ba59e9e | 0x0cfff3f3 | 0x3ff0cfcf | 0xbf72cdcd | 0x4b175c5c | 0x52b8eaea |
| 5 | 0xc869a1a1 | 0xc76aadad | 0x85830606 | 0x7ab0caca | 0xb570c5c5 | 0xf4659191 | 0xb2d96b6b | 0xa7892e2e |
| 6 | 0x661e7878 | 0xb4249090 | 0x360e3838 | 0x265f7979 | 0xef628d8d | 0x38596161 | 0x95d24747 | 0x2aa08a8a |
| 7 | 0x84d75353 | 0x00000000 | 0x5e471919 | 0x0b565d5d | 0xe39d7e7e | 0x9fd04f4f | 0xbb279c9c | 0x1a534949 |
| 8 | 0x42e9abab | 0x43bdfefe | 0xa2882a2a | 0x9ad14b4b | 0x40410101 | 0xdbc41f1f | 0xd838e0e0 | 0x61b7d6d6 |
| 9 | 0x60e38383 | 0x16acbaba | 0x295c7575 | 0x34a69292 | 0xf7996e6e | 0xe434d0d0 | 0x721a6868 | 0x01545555 |
| A | 0x691d7474 | 0x2ef5dbdb | 0x6ae18b8b | 0x962eb8b8 | 0x8a800a0a | 0xfe679999 | 0xe2c92b2b | 0xe0618181 |
| B | 0x81d65757 | 0xb7d86f6f | 0xeb37dcdc | 0x51441515 | 0xa6dd7b7b | 0x09fef7f7 | 0xb68c3a3a | 0x932fbcbc |
| C | 0xb98f3636 | 0x771b6c6c | 0x13adbebe | 0xda904a4a | 0x57b9eeee | 0xa9de7777 | 0x4cbef2f2 | 0x837efdfd |
| D | 0x220a2828 | 0xc5c20707 | 0xf531c4c4 | 0xa88a2222 | 0x31a79696 | 0xf9ce3737 | 0x977aeded | 0x49bff6f6 |
| E | 0xad8b2626 | 0xcd68a5a5 | 0xcb955e5e | 0x624b2929 | 0x3c0c3030 | 0xce945a5a | 0xab76dddd | 0x867ff9f9 |
| F | 0x78186060 | 0x30f3c3c3 | 0x897cf5f5 | 0x5cefb3b3 | 0xd23ae8e8 | 0xacdf7373 | 0x794c3535 | 0xa0208080 |

| | 8 | 9 | A | B | C | D | E | F |
|---|---|---|---|---|---|---|---|---|
| 0 | 0x4e165858 | 0x6eb4dada | 0x44145050 | 0xcac10b0b | 0x8828a0a0 | 0x17f8efef | 0x9c2cb0b0 | 0x11051414 |
| 1 | 0x02a8aaaa | 0x54451111 | 0x5f134c4c | 0xbe269898 | 0x6d482525 | 0x9e841a1a | 0x1e061818 | 0xfd9b6666 |
| 2 | 0xff33cccc | 0x04555151 | 0x270b2c2c | 0x4f420d0d | 0x59eeb7b7 | 0xf3cc3f3f | 0x1caeb2b2 | 0xea638989 |
| 3 | 0x80820202 | 0xa3dc7f7f | 0xc4965252 | 0x12f9ebeb | 0xa174d5d5 | 0xb38d3e3e | 0xc33ffcfc | 0x3ea49a9a |
| 4 | 0x8f810e0e | 0x3d586565 | 0xcc3cf0f0 | 0x7d196464 | 0x7ee59b9b | 0x91871616 | 0x734e3d3d | 0x08aaa2a2 |
| 5 | 0x18fbe3e3 | 0x47e8afaf | 0x330f3c3c | 0x674a2d2d | 0xb071c1c1 | 0x0e575959 | 0xe99f7676 | 0xe135d4d4 |
| 6 | 0xb1259494 | 0xaa228888 | 0x8c7df1f1 | 0xd73becec | 0x05010404 | 0xa5218484 | 0x9879e1e1 | 0x9b851e1e |
| 7 | 0x7c4d3131 | 0xee36d8d8 | 0x0a020808 | 0x7be49f9f | 0x20a28282 | 0xd4c71313 | 0xe8cb2323 | 0xe69c7a7a |
| 8 | 0x2fa18e8e | 0x2bf4dfdf | 0x3af1cbcb | 0xf6cd3b3b | 0x1dfae7e7 | 0xe5608585 | 0x41155454 | 0x25a38686 |
| 9 | 0x19afb6b6 | 0xdf914e4e | 0xfa32c8c8 | 0xf030c0c0 | 0x21f6d7d7 | 0xbc8e3232 | 0x75b3c6c6 | 0x6fe08f8f |
| A | 0xc0c30303 | 0x8d29a4a4 | 0xaf238c8c | 0x07a9aeae | 0x390d3434 | 0x1f524d4d | 0x764f3939 | 0xd36ebdbd |
| B | 0x0f030c0c | 0x03fcffff | 0xc26ba9a9 | 0xba73c9c9 | 0xd96cb5b5 | 0xdc6db1b1 | 0x375a6d6d | 0x15504545 |
| C | 0x55114444 | 0xbdda6767 | 0x2c5d7171 | 0x45400505 | 0x631f7c7c | 0x50104040 | 0x325b6969 | 0xb8db6363 |
| D | 0x992db4b4 | 0xa475d1d1 | 0x90d34343 | 0x5a124848 | 0x58bae2e2 | 0x71e69797 | 0x64b6d2d2 | 0x70b2c2c2 |
| E | 0xf1649595 | 0x5dbbe6e6 | 0x35f2c7c7 | 0x2d092424 | 0xd1c61717 | 0xd66fb9b9 | 0xdec51b1b | 0x94861212 |
| F | 0x9d78e5e5 | 0x56edbbbb | 0x235e7d7d | 0xc63ef8f8 | 0x8bd45f5f | 0xe7c82f2f | 0xdd39e4e4 | 0x68492121 |

# Fig. 9a

LUT1[256] =

|   | 0 | 1 | 2 | 3 | 4 | 5 | 6 | 7 |
|---|---|---|---|---|---|---|---|---|
| 0 | 0x5b8ed55b | 0x42d09242 | 0xa74deaa7 | 0xfb06fdfb | 0x33fccf33 | 0x8765e287 | 0xf4c93df4 | 0xde6bb5de |
| 1 | 0xac872bac | 0x9dfb669d | 0x6af2986a | 0xd9ae77d9 | 0xa8822aa8 | 0xfa46bcfa | 0x10140410 | 0x0fcfc00f |
| 2 | 0x72ec9e72 | 0x094a4309 | 0x41105141 | 0xd324f7d3 | 0x46d59346 | 0xbf53ecbf | 0x62f89a62 | 0xe9927be9 |
| 3 | 0x9374e793 | 0xce7fb1ce | 0x706c1c70 | 0xa60daba6 | 0x27edca27 | 0x20280820 | 0xa348eba3 | 0x56c19756 |
| 4 | 0x1d5b461d | 0x1c1b071c | 0x9e3ba59e | 0xf30cfff3 | 0xcf3ff0cf | 0xcdbf72cd | 0x5c4b175c | 0xea52b8ea |
| 5 | 0xa1c869a1 | 0xadc76aad | 0x06858306 | 0xca7ab0ca | 0xc5b570c5 | 0x91f46591 | 0x6bb2d96b | 0x2ea7892e |
| 6 | 0x78661e78 | 0x90b42490 | 0x38360e38 | 0x79265f79 | 0x8def628d | 0x61385961 | 0x4795d247 | 0x8a2aa08a |
| 7 | 0x5384d753 | 0x00000000 | 0x195e4719 | 0x5d0b565d | 0x7ee39d7e | 0x4f9fd04f | 0x9cbb279c | 0x491a5349 |
| 8 | 0xab42e9ab | 0xfe43bdfe | 0x2aa2882a | 0x4b9ad14b | 0x01404101 | 0x1fdbc41f | 0xe0d838e0 | 0xd661b7d6 |
| 9 | 0x8360e383 | 0xba16acba | 0x75295c75 | 0x9234a692 | 0x6ef7996e | 0xd0e434d0 | 0x68721a68 | 0x55015455 |
| A | 0x74691d74 | 0xdb2ef5db | 0x8b6ae18b | 0xb8962eb8 | 0x0a8a800a | 0x99fe6799 | 0x2be2c92b | 0x81e06181 |
| B | 0x5781d657 | 0x6fb7d86f | 0xdceb37dc | 0x15514415 | 0x7ba6dd7b | 0xf709fef7 | 0x3ab68c3a | 0xbc932fbc |
| C | 0x36b98f36 | 0x6c771b6c | 0xbe13adbe | 0x4ada904a | 0xee57b9ee | 0x77a9de77 | 0xf24cbef2 | 0xfd837efd |
| D | 0x28220a28 | 0x07c5c207 | 0xc4f531c4 | 0x22a88a22 | 0x9631a796 | 0x37f9ce37 | 0xed977aed | 0xf649bff6 |
| E | 0x26ad8b26 | 0xa5cd68a5 | 0x5ecb955e | 0x29624b29 | 0x303c0c30 | 0x5ace945a | 0xddab76dd | 0xf9867ff9 |
| F | 0x60781860 | 0xc330f3c3 | 0xf5897cf5 | 0xb35cefb3 | 0xe8d23ae8 | 0x73acdf73 | 0x35794c35 | 0x80a02080 |

|   | 8 | 9 | A | B | C | D | E | F |
|---|---|---|---|---|---|---|---|---|
| 0 | 0x584e1658 | 0xda6eb4da | 0x50441450 | 0x0bcac10b | 0xa08828a0 | 0xef17f8ef | 0xb09c2cb0 | 0x14110514 |
| 1 | 0xaa02a8aa | 0x11544511 | 0x4c5f134c | 0x98be2698 | 0x256d4825 | 0x1a9e841a | 0x181e0618 | 0x66fd9b66 |
| 2 | 0xccff33cc | 0x51045551 | 0x2c270b2c | 0x0d4f420d | 0xb759eeb7 | 0x3ff3cc3f | 0xb21caeb2 | 0x89ea6389 |
| 3 | 0x02808202 | 0x7fa3dc7f | 0x52c49652 | 0xeb12f9eb | 0xd5a174d5 | 0x3eb38d3e | 0xfcc33ffc | 0x9a3ea49a |
| 4 | 0x0e8f810e | 0x653d5865 | 0xf0cc3cf0 | 0x647d1964 | 0x9b7ee59b | 0x16918716 | 0x3d734e3d | 0xa208aaa2 |
| 5 | 0xe318fbe3 | 0xaf47e8af | 0x3c330f3c | 0x2d674a2d | 0xc1b071c1 | 0x590e5759 | 0x76e99f76 | 0xd4e135d4 |
| 6 | 0x94b12594 | 0x88aa2288 | 0xf18c7df1 | 0xecd73bec | 0x04050104 | 0x84a52184 | 0xe19879e1 | 0x1e9b851e |
| 7 | 0x317c4d31 | 0xd8ee36d8 | 0x080a0208 | 0x9f7be49f | 0x8220a282 | 0x13d4c713 | 0x23e8cb23 | 0x7ae69c7a |
| 8 | 0x8e2fa18e | 0xdf2bf4df | 0xcb3af1cb | 0x3bf6cd3b | 0xe71dfae7 | 0x85e56085 | 0x54411554 | 0x8625a386 |
| 9 | 0xb619afb6 | 0x4edf914e | 0xc8fa32c8 | 0xc0f030c0 | 0xd721f6d7 | 0x32bc8e32 | 0xc675b3c6 | 0x8f6fe08f |
| A | 0x03c0c303 | 0xa48d29a4 | 0x8caf238c | 0xae07a9ae | 0x34390d34 | 0x4d1f524d | 0x39764f39 | 0xbdd36ebd |
| B | 0x0c0f030c | 0xff03fcff | 0xa9c26ba9 | 0xc9ba73c9 | 0xb5d96cb5 | 0xb1dc6db1 | 0x6d375a6d | 0x45155045 |
| C | 0x44551144 | 0x67bdda67 | 0x712c5d71 | 0x05454005 | 0x7c631f7c | 0x40501040 | 0x69325b69 | 0x63b8db63 |
| D | 0xb4992db4 | 0xd1a475d1 | 0x4390d343 | 0x485a1248 | 0xe258bae2 | 0x9771e697 | 0xd264b6d2 | 0xc270b2c2 |
| E | 0x95f16495 | 0xe65dbbe6 | 0xc735f2c7 | 0x242d0924 | 0x17d1c617 | 0xb9d66fb9 | 0x1bdec51b | 0x12948612 |
| F | 0xe59d78e5 | 0xbb56edbb | 0x7d235e7d | 0xf8c63ef8 | 0x5f8bd45f | 0x2fe7c82f | 0xe4dd39e4 | 0x21684921 |

*Fig. 9b*

LUT2[256] =

|   | 0 | 1 | 2 | 3 | 4 | 5 | 6 | 7 |
|---|---|---|---|---|---|---|---|---|
| 0 | 0x5b5b8ed5 | 0x4242d092 | 0xa7a74dea | 0xfbfb06fd | 0x3333fccf | 0x878765e2 | 0xf4f4c93d | 0xdede6bb5 |
| 1 | 0xacac872b | 0x9d9dfb66 | 0x6a6af298 | 0xd9d9ae77 | 0xa8a8822a | 0xfafa46bc | 0x10101404 | 0x0f0fcfc0 |
| 2 | 0x7272ec9e | 0x09094a43 | 0x41411051 | 0xd3d324f7 | 0x4646d593 | 0xbfbf53ec | 0x6262f89a | 0xe9e9927b |
| 3 | 0x939374e7 | 0xcece7fb1 | 0x70706c1c | 0xa6a60dab | 0x2727edca | 0x20202808 | 0xa3a348eb | 0x5656c197 |
| 4 | 0x1d1d5b46 | 0x1c1c1b07 | 0x9e9e3ba5 | 0xf3f30cff | 0xcfcf3ff0 | 0xcdcdbf72 | 0x5c5c4b17 | 0xeaea52b8 |
| 5 | 0xa1a1c869 | 0xadadc76a | 0x06068583 | 0xcaca7ab0 | 0xc5c5b570 | 0x9191f465 | 0x6b6bb2d9 | 0x2e2ea789 |
| 6 | 0x7878661e | 0x9090b424 | 0x3838360e | 0x7979265f | 0x8d8def62 | 0x61613859 | 0x474795d2 | 0x8a8a2aa0 |
| 7 | 0x535384d7 | 0x00000000 | 0x19195e47 | 0x5d5d0b56 | 0x7e7ee39d | 0x4f4f9fd0 | 0x9c9cbb27 | 0x49491a53 |
| 8 | 0xabab42e9 | 0xfefe43bd | 0x2a2aa288 | 0x4b4b9ad1 | 0x01014041 | 0x1f1fdbc4 | 0xe0e0d838 | 0xd6d661b7 |
| 9 | 0x838360e3 | 0xbaba16ac | 0x7575295c | 0x929234a6 | 0x6e6ef799 | 0xd0d0e434 | 0x6868721a | 0x55550154 |
| A | 0x7474691d | 0xdbdb2ef5 | 0x8b8b6ae1 | 0xb8b8962e | 0x0a0a8a80 | 0x9999fe67 | 0x2b2be2c9 | 0x8181e061 |
| B | 0x575781d6 | 0x6f6fb7d8 | 0xdcdceb37 | 0x15155144 | 0x7b7ba6dd | 0xf7f709fe | 0x3a3ab68c | 0xbcbc932f |
| C | 0x3636b98f | 0x6c6c771b | 0xbebe13ad | 0x4a4ada90 | 0xeeee57b9 | 0x7777a9de | 0xf2f24cbe | 0xfdfd837e |
| D | 0x2828220a | 0x0707c5c2 | 0xc4c4f531 | 0x2222a88a | 0x969631a7 | 0x3737f9ce | 0xeded977a | 0xf6f649bf |
| E | 0x2626ad8b | 0xa5a5cd68 | 0x5e5ecb95 | 0x2929624b | 0x30303c0c | 0x5a5ace94 | 0xddddab76 | 0xf9f9867f |
| F | 0x60607818 | 0xc3c330f3 | 0xf5f5897c | 0xb3b35cef | 0xe8e8d23a | 0x7373acdf | 0x3535794c | 0x8080a020 |

|   | 8 | 9 | A | B | C | D | E | F |
|---|---|---|---|---|---|---|---|---|
| 0 | 0x58584e16 | 0xdada6eb4 | 0x50504414 | 0x0b0bcac1 | 0xa0a08828 | 0xefef17f8 | 0xb0b09c2c | 0x14141105 |
| 1 | 0xaaaa02a8 | 0x11115445 | 0x4c4c5f13 | 0x9898be26 | 0x25256d48 | 0x1a1a9e84 | 0x18181e06 | 0x6666fd9b |
| 2 | 0xcccccff33 | 0x51510455 | 0x2c2c270b | 0x0d0d4f42 | 0xb7b759ee | 0x3f3ff3cc | 0xb2b21cae | 0x8989ea63 |
| 3 | 0x02028082 | 0x7f7fa3dc | 0x5252c496 | 0xebeb12f9 | 0xd5d5a174 | 0x3e3eb38d | 0xfcfcc33f | 0x9a9a3ea4 |
| 4 | 0x0e0e8f81 | 0x65653d58 | 0xf0f0cc3c | 0x64647d19 | 0x9b9b7ee5 | 0x16169187 | 0x3d3d734e | 0xa2a208aa |
| 5 | 0xe3e318fb | 0xafaf47e8 | 0x3c3c330f | 0x2d2d674a | 0xc1c1b071 | 0x59590e57 | 0x7676e99f | 0xd4d4e135 |
| 6 | 0x9494b125 | 0x8888aa22 | 0xf1f18c7d | 0xececd73b | 0x04040501 | 0x8484a521 | 0xe1e19879 | 0x1e1e9b85 |
| 7 | 0x31317c4d | 0xd8d8ee36 | 0x08080a02 | 0x9f9f7be4 | 0x828220a2 | 0x1313d4c7 | 0x2323e8cb | 0x7a7ae69c |
| 8 | 0x8e8e2fa1 | 0xdfdf2bf4 | 0xcbcb3af1 | 0x3b3bf6cd | 0xe7e71dfa | 0x8585e560 | 0x54544115 | 0x868625a3 |
| 9 | 0xb6b619af | 0x4e4eedf91 | 0xc8c8fa32 | 0xc0c0f030 | 0xd7d721f6 | 0x3232bc8e | 0xc6c675b3 | 0x8f8f6fe0 |
| A | 0x0303c0c3 | 0xa4a48d29 | 0x8c8caf23 | 0xaeae07a9 | 0x3434390d | 0x4d4d1f52 | 0x3939764f | 0xbdbdd36e |
| B | 0x0c0c0f03 | 0xffff03fc | 0xa9a9c26b | 0xc9c9ba73 | 0xb5b5d96c | 0xb1b1dc6d | 0x6d6d375a | 0x45451550 |
| C | 0x44445511 | 0x6767bdda | 0x71712c5d | 0x05054540 | 0x7c7c631f | 0x40405010 | 0x6969325b | 0x6363b8db |
| D | 0xb4b4992d | 0xd1d1a475 | 0x434390d3 | 0x48485a12 | 0xe2e258ba | 0x979771e6 | 0xd2d264b6 | 0xc2c270b2 |
| E | 0x9595f164 | 0xe6e65dbb | 0xc7c735f2 | 0x24242d09 | 0x1717d1c6 | 0xb9b9d66f | 0x1b1bdec5 | 0x12129486 |
| F | 0xe5e59d78 | 0xbbbb56ed | 0x7d7d235e | 0xf8f8c63e | 0x5f5f8bd4 | 0x2f2fe7c8 | 0xe4e4dd39 | 0x21216849 |

# Fig. 9c

LUT3[256] =

|   | 0 | 1 | 2 | 3 | 4 | 5 | 6 | 7 |
|---|---|---|---|---|---|---|---|---|
| 0 | 0xd55b5b8e | 0x924242d0 | 0xeaa7a74d | 0xfdfbfb06 | 0xcf3333fc | 0xe2878765 | 0x3df4f4c9 | 0xb5dede6b |
| 1 | 0x2bacac87 | 0x669d9dfb | 0x986a6af2 | 0x77d9d9ae | 0x2aa8a882 | 0xbcfafa46 | 0x04101014 | 0xc00f0fcf |
| 2 | 0x9e7272ec | 0x4309094a | 0x51414110 | 0xf7d3d324 | 0x934646d5 | 0xecbfbf53 | 0x9a6262f8 | 0x7be9e992 |
| 3 | 0xe7939374 | 0xb1cece7f | 0x1c70706c | 0xaba6a60d | 0xca2727ed | 0x08202028 | 0xeba3a348 | 0x975656c1 |
| 4 | 0x461d1d5b | 0x071c1c1b | 0xa59e9e3b | 0xfff3f30c | 0xf0cfcf3f | 0x72cdcdbf | 0x175c5c4b | 0xb8eaea52 |
| 5 | 0x69a1a1c8 | 0x6aadadc7 | 0x83060685 | 0xb0caca7a | 0x70c5c5b5 | 0x659191f4 | 0xd96b6bb2 | 0x892e2ea7 |
| 6 | 0x1e787866 | 0x249090b4 | 0x0e383836 | 0x5f797926 | 0x628d8def | 0x59616138 | 0xd2474795 | 0xa08a8a2a |
| 7 | 0xd7535384 | 0x00000000 | 0x4719195e | 0x565d5d0b | 0x9d7e7ee3 | 0xd04f4f9f | 0x279c9cbb | 0x5349491a |
| 8 | 0xe9abab42 | 0xbdfefe43 | 0x882a2aa2 | 0xd14b4b9a | 0x41010140 | 0xc41f1fdb | 0x38e0e0d8 | 0xb7d6d661 |
| 9 | 0xe3838360 | 0xacbaba16 | 0x5c757529 | 0xa6929234 | 0x996e6ef7 | 0x34d0d0e4 | 0x1a686872 | 0x54555501 |
| A | 0x1d747469 | 0xf5dbdb2e | 0xe18b8b6a | 0x2eb8b896 | 0x800a0a8a | 0x679999fe | 0xc92b2be2 | 0x618181e0 |
| B | 0xd6575781 | 0xd86f6fb7 | 0x37dcdceb | 0x44151551 | 0xdd7b7ba6 | 0xfef7f709 | 0x8c3a3ab6 | 0x2fbcbc93 |
| C | 0x8f3636b9 | 0x1b6c6c77 | 0xadbebe13 | 0x904a4ada | 0xb9eeee57 | 0xde7777a9 | 0xbef2f24c | 0x7efdfd83 |
| D | 0x0a282822 | 0xc20707c5 | 0x31c4c4f5 | 0x8a2222a8 | 0xa7969631 | 0xce3737f9 | 0x7aeded97 | 0xbff6f649 |
| E | 0x8b2626ad | 0x68a5a5cd | 0x955e5ecb | 0x4b292962 | 0x0c30303c | 0x945a5ace | 0x76ddddab | 0x7ff9f986 |
| F | 0x18606078 | 0xf3c3c330 | 0x7cf5f589 | 0xefb3b35c | 0x3ae8e8d2 | 0xdf7373ac | 0x4c353579 | 0x208080a0 |

|   | 8 | 9 | A | B | C | D | E | F |
|---|---|---|---|---|---|---|---|---|
| 0 | 0x1658584e | 0xb4dada6e | 0x14505044 | 0xc10b0bca | 0x28a0a088 | 0xf8efef17 | 0x2cb0b09c | 0x05141411 |
| 1 | 0xa8aaaa02 | 0x45111154 | 0x134c4c5f | 0x269898be | 0x4825256d | 0x841a1a9e | 0x0618181e | 0x9b6666fd |
| 2 | 0x33ccccff | 0x55515104 | 0x0b2c2c27 | 0x420d0d4f | 0xeeb7b759 | 0xcc3f3ff3 | 0xaeb2b21c | 0x638989ea |
| 3 | 0x82020280 | 0xdc7f7fa3 | 0x965252c4 | 0xf9ebeb12 | 0x74d5d5a1 | 0x8d3e3eb3 | 0x3ffcfcc3 | 0xa49a9a3e |
| 4 | 0x810e0e8f | 0x5865653d | 0x3cf0f0cc | 0x1964647d | 0xe59b9b7e | 0x87161691 | 0x4e3d3d73 | 0xaaa2a208 |
| 5 | 0xfbe3e318 | 0xe8afaf47 | 0x0f3c3c33 | 0x4a2d2d67 | 0x71c1c1b0 | 0x5759590e | 0x9f7676e9 | 0x35d4d4e1 |
| 6 | 0x259494b1 | 0x228888aa | 0x7df1f18c | 0x3bececd7 | 0x01040405 | 0x218484a5 | 0x79e1e198 | 0x851e1e9b |
| 7 | 0x4d31317c | 0x36d8d8ee | 0x0208080a | 0xe49f9f7b | 0xa2828220 | 0xc71313d4 | 0xcb2323e8 | 0x9c7a7ae6 |
| 8 | 0xa18e8e2f | 0xf4dfdf2b | 0xf1cbcb3a | 0xcd3b3bf6 | 0xfae7e71d | 0x608585e5 | 0x15545441 | 0xa3868625 |
| 9 | 0xafb6b619 | 0x914e4edf | 0x32c8c8fa | 0x30c0c0f0 | 0xf6d7d721 | 0x8e3232bc | 0xb3c6c675 | 0xe08f8f6f |
| A | 0xc30303c0 | 0x29a4a48d | 0x238c8caf | 0xa9aeae07 | 0x0d343439 | 0x524d4d1f | 0x4f393976 | 0x6ebdbdd3 |
| B | 0x030c0c0f | 0xfcffff03 | 0x6ba9a9c2 | 0x73c9c9ba | 0xcb5b5d9 | 0x6db1b1dc | 0x5a6d6d37 | 0x50454515 |
| C | 0x11444455 | 0xda6767bd | 0x5d71712c | 0x40050545 | 0x1f7c7c63 | 0x10404050 | 0x5b696932 | 0xdb6363b8 |
| D | 0x2db4b499 | 0x75d1d1a4 | 0xd3434390 | 0x1248485a | 0xbae2e258 | 0xe6979771 | 0xb6d2d264 | 0xb2c2c270 |
| E | 0x649595f1 | 0xbbe6e65d | 0xf2c7c735 | 0x0924242d | 0xc61717d1 | 0x6fb9b9d6 | 0xc51b1bde | 0x86121294 |
| F | 0x78e5e59d | 0xedbbbb56 | 0x5e7d7d23 | 0x3ef8f8c6 | 0xd45f5f8b | 0xc82f2fe7 | 0x39e4e4dd | 0x49212168 |

## Fig. 9d

CONNECTOR

211

109

Input/Output
Interface 207

PROCESSOR A
201a

ROM
204

PROCESSOR B
201b

202

PROCESSOR C
201c

PROCESSOR D
201d

209

LOGIC UNIT
207

RAM
203

NVM
205

*Fig. 10*

Europäisches
Patentamt
European
Patent Office
Office européen
des brevets

# EUROPEAN SEARCH REPORT

**Application Number**

EP 15 30 5166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN HAN ET AL: "A programmable security processor for cryptography algorithms", SOLID-STATE AND INTEGRATED-CIRCUIT TECHNOLOGY, 2008. ICSICT 2008. 9TH INTERNATIONAL CONFERENCE ON, IEEE, PISCATAWAY, NJ, USA, 20 October 2008 (2008-10-20), pages 2144-2147, XP031384711, DOI: 10.1109/ICSICT.2008.4734992 ISBN: 978-1-4244-2185-5 * the whole document * | 1-11 | INV. H04L9/06 |
| A | Whitfield Diffie: "SMS4 Encryption Algorithm for Wireless Networks Translated and typeset by", , 15 March 2008 (2008-03-15), XP055204225, Retrieved from the Internet: URL:http://eprint.iacr.org/2008/329.pdf [retrieved on 2015-07-23] * the whole document * | 1-11 | |
| A | Anonymous: "Advanced Encryption Standard - Wikipedia, the free encyclopedia", , 23 January 2015 (2015-01-23), XP055204719, Retrieved from the Internet: URL:https://en.wikipedia.org/w/index.php?title=Advanced_Encryption_Standard&oldid=643800262 [retrieved on 2015-07-27] * page 5 * | 1-11 | TECHNICAL FIELDS SEARCHED (IPC) H04L G01C |

The present search report has been drawn up for all claims

| Place of search | Date of completion of the search | Examiner |
|---|---|---|
| Munich | 3 August 2015 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)